# EUROPEAN PATENT SPECIFICATION

(11) **EP 2 085 259 B1**
(45) Date of publication and mention of the grant of the patent: **19.10.2011**
(21) Application number: 09151565.0
(22) Date of filing: 28.01.2009
(51) Int. Cl.: B60J 1/20, B60R 5/04

(54) **Winding assembly for vehicles**
Wickelanordnung für Fahrzeuge
Ensemble d'enroulement pour véhicules

(30) Priority: 29.01.2008 IT TO20080057
(43) Date of publication of application: 05.08.2009
(73) Proprietor: Fibro S.p.A., 10040 Cumiana (IT)
(72) Inventor: Signoretto, Carlo, 10129 Torino (IT)
(74) Representative: Jorio, Paolo

(56) References cited:
- EP-A- 1 803 600
- DE-A1- 19 834 777
- US-A1- 2007 051 475

## Description

The present invention relates to a winding assembly for vehicles.

The use of extractable webs, such as for example sun curtains, covering and/or partioning webs, etc. is generally known on vehicles, and on cars in particular, which webs are carried by winding assemblies adapted to withhold the corresponding webs in a rolled resting position and to allow the web itself to be unwound upon a simple pulling action by the user. Winding assembly are known, for example, from US 2007/051475, EP 1 803 600 and DE 198 34 777.

For this purpose, the known winding assemblies comprise a pair of heads connecting to a fixed supporting structure, a winding drum arranged between the heads so as to rotate about a fixed hinging axis and a return spring device for automatically rewinding the web on the winding drum upon the unwinding of the web itself.

The return spring devices normally comprise a fixed supporting shaft, generally made of metal material, firmly connected to one of the heads so as to protrude and extending into the winding drum in a position coaxial to the axis, for rotationally supporting the drum. A torsion spring is wound on the supporting shaft, which spring has one end integrally connected to the supporting shaft and an opposite end integrally connected to the winding drum.

The known solutions of the above-described type, although universally employed, are complex, heavy and expensive, mainly because they comprise a high number of components and because the components themselves need difficult assembly operations. Specifically, the supporting shaft must be firmly connected to the corresponding supporting head, the drum coupled to the supporting shaft in a position perfectly coaxial to the shaft itself and the spring fitted on the supporting shaft and firmly connected both to the drum and the supporting shaft.

In order to ensure high functional efficiency and reliability, the various components must also be manufactured with narrow dimensional and shape tolerances. Indeed, even minimum dimensional errors in coupling the drum to the supporting shaft and/or the supporting shaft to the head cause jamming, undesired jerking movement of the web with unacceptable noise and vibrations, even after short periods of use.

It is the object of the present invention to provide a winding assembly for vehicles, which allows to simply and cost-effectively solve the above-mentioned problems and in particular a winding assembly which is simple and cost-effective to be manufactured, highly efficient and functionally reliable.

According to the present invention, a winding assembly for vehicles is provided, comprising two side connecting and supporting heads adapted to be firmly connected to respective supporting elements, an intermediate winding drum extending between the heads and adapted to carry a flexible web connected thereto and wound thereon; a pair of hubs firmly connected to the opposite axial ends of said winding drum and coupled to said heads so as to rotate about a hinging axis; and a return spring interposed between one of the side heads and the winding drum for rotating the drum in the winding direction of the web; the assembly being **characterized in that** said return spring extends in a cantilever manner so as to protrude from a first of said hubs into said winding drum.

In the above-described assembly, the return spring preferably comprises a first end portion firmly connected to said first hub, and a second end portion directly connected to the side head to which said first hub is coupled.

Furthermore, the return spring preferably comprises a helical portion extending so as to protrude into said winding drum coaxially to said hinging axis and is **characterized in that** said second end portion comprises an intermediate rectilinear segment extending into said helical portion.

The invention will now be described with reference to the accompanying figures illustrating a non-limitative embodiment thereof, in which:
figure 1 shows, in section, a preferred embodiment of a winding assembly for vehicles according to the present invention;
figure 2 shows, in section and on an enlarged scale with parts removed for clarity, an end portion of the winder in figure 1; and
figure 3 is a perspective view of a detail in figure 1 broken down into its components.

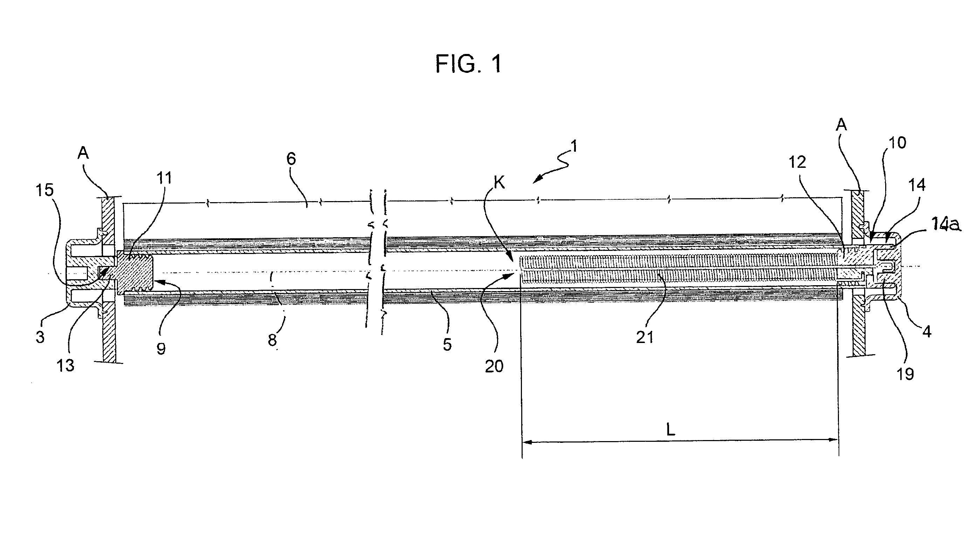

In figure 1, numeral 1 indicates as a whole a winding assembly for vehicles in general, particularly for cars.

The winding assembly 1 comprises two side heads 3 and 4 for supporting and connecting to a supporting structure A, and a winding drum 5 extending between the heads 3 and 4 and carrying a flexible web 6 wound thereon, e.g. serving the function of a sun curtain or a partitioning element or even of a closing element for a compartment, e.g. a boot.

The drum 5 is coupled to the heads 3 and 4 so as to rotate about a fixed hinging axis 8 coinciding with the axis of the drum 5 itself, and in an axially fixed position by means of a pair of hubs, indicated by numerals 9 and 10. The hubs 9 and 10 have respective cap portions 11, 12 inserted and blocked in a known manner into a corresponding end segment of the drum 5, and respective hinging portions 13, 14 axially extending so as to protrude from the drum 5.

The hinging portion 13 of the hub 9 consists of a pin coaxial to axis 8 and accommodated in a blank hole 15 of the head 3. Alternatively, according to a variant (not shown) the portion 13 comprises, in addition to the mentioned pin, a collar which coaxially extends outwardly the pin, and is rotationally coupled to a hinge hub carried by the head 3 coaxially to the axis. The mentioned pin protrudes over the collar and is arranged in abutment against a bottom surface of the seat 15.

The hinging portion 14 of the hub 10 consists, instead, of a collar 14a, which is integral with the corresponding cap portion 12, delimits a shoulder 16 in abutment against a corresponding axial edge of the winding drum 5, forms an extension of the drum itself 5 and is rotationally coupled to a hollow hinging pin 19 carried by the head 4 coaxially to axis 8.

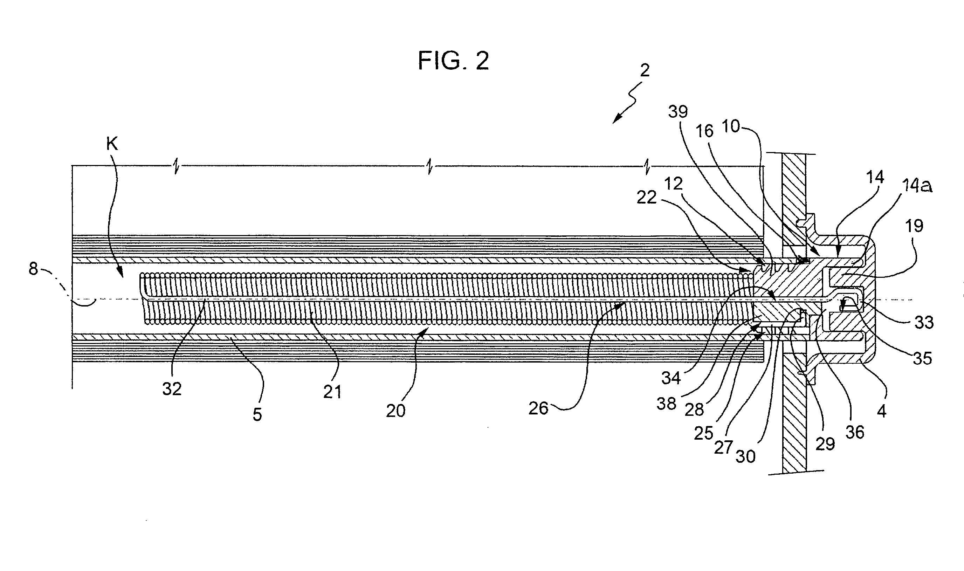

Again with reference to figure 1 and, specifically, to figure 2, the assembly 1 further comprises a helical twisting spring 20, which extends so as to protrude in a cantilever manner from the cap portion 12 of the hub 10 coaxially to axis 8 and comprises a helical portion 21 extending from a frontal surface 22 of the cap portion 12 and over a length L shorter than the length of the drum 5.

Moreover, the spring 20 comprises two end connecting portions, indicated by numerals 25 and 26, of which portion 25 is substantially L-shaped and comprises a longitudinal rectilinear segment 27 engaging a longitudinal groove 28 outside the cap portion 12, and a radial end segment 29 inserted into a hole 30 of the cap portion 12 itself, obtained in a direction substantially orthogonal to axis 8 and in close to the shoulder 16 for withholding the helical portion 21 in contact with the frontal surface 22 and in an angularly fixed position with respect to the hub 10. Alternatively, the end segment extends in a tangential direction to positively engage an external seat of the portion 12.

Again with reference to figures 1 and 2, the portion 26 instead comprises an intermediate rectilinear return segment 32 and one end connecting and retaining segment 33. The intermediate segment 32 extends from a free end K of the helical portion 21 towards the head 4 into the helical portion 21 itself and through a longitudinal through passage 34 obtained in the cap portion 12 coaxially to axis 8. The end segment 33 instead extends outwardly the cap portion 12 and into the hinging portion 14 and has a bend hook shape. The geometry of the segment 33 is such that it is adapted to be arranged in abutment against the cap portion 12 to exert an action antagonizing the removal of the segment 32 from the passage 34 and to positively engage a flattened, angular retaining seat 35 of the segment 33 itself obtained in the pin 19 coaxially to axis 8 and having an inlet 36 facing towards the cap portion 12.

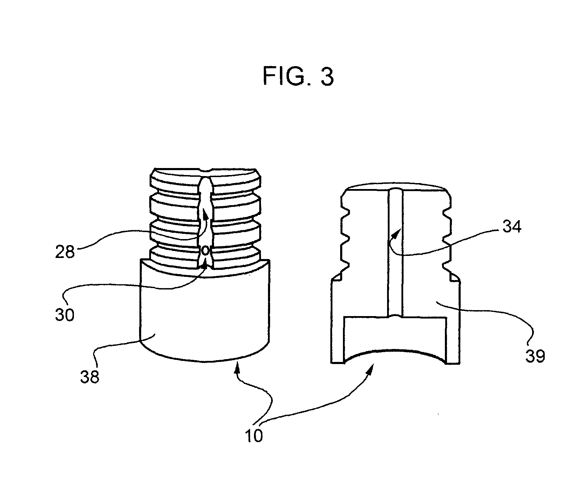

Again with reference to figure 2, and with reference to figure 3, the hub 10 consists of two substantially semi-cylindrical portions 38 and 39 coupled to each other and delimiting the passage 34 therebetween.

From the above, it is apparent that the above-described winding assembly 1 has a smaller number of components than the known solutions and, therefore, considerably lighter weight and lower cost.

The above is essentially due to the fact that the twisting or return spring 20, which in the known solutions is supported by, and directly connected to, a dedicated supporting and connecting shaft made of metal material, is of the "self-carrying" type in the described assembly 1, i.e. capable of freely extending so as to protrude from the corresponding hub 10.

The manufacturing features of the spring 20 and, specifically, the fact that the spring 20 itself has its opposite end connecting segments both lying in a position by the side of a same connecting head, allow an easy and immediate connection of the spring 20 to the hub 10 and, thus, immediately to the winding hub 5 because the connection is subjected to the simple insertion of segment 27 into the groove 28 and segment 29 into the radial hole 30, and an equally easy connection to the supporting head 4 obtained by means of the simple axial insertion of the end portion 33 into the retaining seat 35. Such features allow, again as compared to the known solutions, to use shorter and thus lighter springs, and to reduce times, difficulties and thus assembly costs.

Finally, the assembly operations are further facilitated and accelerated by the hub 10 being formed in two separate parts which allow, on one hand, an immediate insertion of the rectilinear segment 32 into the cap portion 12 despite the hook-shaped conformation of the end segment of the spring, and on the other hand, an immediate, easy coupling of the portion 25 of spring 20 to the hub 12 itself.

Furthermore, from the above it is apparent that the direct coupling of the hub 10 to the fulcrum pin 19 of the head 4 allows to make, as compared to the known solutions, a precise, efficient and reliable winding assembly, the rotation of the winding drum 5 being determined only by the cylindrical coupling between the portion 14 and the fulcrum pin 19 itself.

Finally, from the above it is apparent that changes and variations may be made to the described winding assembly 1 without departing from the scope of protection defined by the claims. Specifically, the hub 10 could be formed in one piece and again provided with the passage 34, through which the segment 32 is inserted before being folded to form the bent segment 33.

Finally, from the above, it is apparent that the described winder 1 may be applied in other fields from those described, and specifically may be used to support webs serving different functions from those shown by way of example.

## Claims

1. A winding assembly (1) for vehicles comprising two side connecting and supporting heads (3) (4) adapted to be firmly connected to respective supporting elements, an intermediate winding drum (5) extending between the side heads (3) (4) and adapted to carry a flexible web (6) connected thereto and wound thereon; a pair of hubs (10) (11) firmly connected to the opposite axial ends of said winding drum (5) and coupled to said heads (3) (4) so as to rotate about a hinging axis (8), and a return spring (20) interposed between one (4) of the side heads (3) (4) and the winding drum (5) for rotating the drum (5) in the winding direction of the web; the assembly (1) being **characterized in that** said return spring (20) extends in a cantilever manner so as to protrude from a first (10) of said hubs (10) (11) into said winding drum (5).

2. An assembly according to claim 1, **characterized in that** said return spring (20) comprises a first end portion (25) firmly connected to said first hub (10) and a second end portion (26) directly connected to the side head (4) to which said first hub (10) is coupled.

3. An assembly according to claim 2, **characterized in that** said return spring (20) comprises a helical portion (21) extending so as to protrude into said winding drum (5) coaxially to said hinging axis (8) and **in that** said second end portion comprises an intermediate rectilinear segment (32) extending into said helical portion (21).

4. An assembly according to claim 3, **characterized in that** said first hub (10) has a passage (34) coaxial to said hinging axis (8) crossed by said intermediate rectilinear segment (32).

5. An assembly according to one of the claims from 2 to 4, **characterized in that** said second end portion (26) comprises a bent segment (33) blocked in an angularly fixed position onto the side head (4) to which said first hub (10) is coupled.

6. An assembly according to any one of the preceding claims, **characterized in that** said first hub (10) consists of two portions (38) (39) coupled to each other and delimiting a passage (34) coaxial to said hinging axis (8) therebetween.

7. An assembly according to any one of the preceding claims, **characterized in that** at least said first hub (10) comprises a cylindrical collar (10) extending so as to protrude from said drum (5) coaxially to said hinging axis (8) and rotationally coupled to a fulcrum pin (19) carried by said corresponding side head (4)

8. An assembly according to claims 2 and 7, **characterized in that** said fulcrum pin (19) has an axial seat (35) engaged in an angularly fixed manner by said second end portion (26) of said return spring (20).

9. An assembly according to any one of the claims 2 to 8 **characterized in that** said first end portion (25) comprises an rectilinear axial segmen (27) extending outwardly said first hub (10) and one end segment (29) extending transversally to said rectilinear segment (27) and engaging a retaining seat (30) of said first hub (10)

## Patentansprüche

1. Wickelanordnung (1) für Kraftfahrzeuge, mit zwei verbindenden und tragenden Seitenköpfen (3, 4), die dazu ausgelegt sind, mit entsprechenden Trageelementen fest verbunden zu werden, einer sich zwischen den Seitenköpfen (3, 4) erstreckenden Zwischenwickeltrommel (5), die dazu ausgelegt ist, ein damit verbundenes und darauf gewickeltes flexibles Netz zu tragen, einem Paar fest mit den entgegengesetzten axialen Enden der Zwischenwickeltrommel (5) verbundener Naben (10, 11), die so mit den Seitenköpfen (3, 4) gekoppelt sind, dass sie um eine Drehachse (8) rotieren, und einer zwischen einen (4) der Seitenköpfe (3, 4) und der Zwischenwickeltrommel (5) zum Rotieren der Zwischenwickeltrommel (5) in Wickelrichtung des Netzes zwischengeschalteten Rückstellfeder (20), **dadurch gekennzeichnet, dass** sich die Rückstellfeder (20) in Art eines Auslegers erstreckt, so dass sie von einer ersten (10) der Naben (10, 11) in die Zwischenwickeltrommel (5) hineinragt.

2. Anordnung (1) nach Anspruch 1, **dadurch gekennzeichnet, dass** die Rückstellfeder (20) einen ersten, fest mit der ersten Nabe (10) verbundenen Endabschnitt (25) und einen zweiten, direkt mit dem Seitenkopf (4), mit dem die erste Nabe (10) gekoppelt ist, verbundenen Endabschnitt (26) umfasst.

3. Anordnung (1) nach Anspruch 2, **dadurch gekennzeichnet, dass** die Rückstellfeder (20) einen spiralförmigen Abschnitt (21) umfasst, der sich so erstreckt, dass er koaxial zu der Drehachse (8) in die Zwischenwickeltrommel (5) hineinragt, und dass der zweite Endabschnitt (26) ein geradliniges, in den spiralförmigen Abschnitt (21) hineinragendes Zwischensegment (32) umfasst.

4. Anordnung (1) nach Anspruch 3, **dadurch gekennzeichnet, dass** die erste Nabe (10) einen zu der Drehachse (8) koaxialen und von dem geradlinigen Zwischensegment (32) durchquerten Durchgang (34)aufweist.

5. Anordnung (1) nach einem der Ansprüche 2 bis 4, **dadurch gekennzeichnet, dass** der zweite Endabschnitt (26) ein abgewinkeltes Segment (33) umfasst, das auf dem Seitenkopf (4), mit dem die erste Nabe (10) gekoppelt ist, in einer winkelmäßig festen Position blockiert ist.

6. Anordnung (1) nach einem der voranstehenden Ansprüche, **dadurch gekennzeichnet, dass** die erste Nabe (10) aus zwei miteinander gekoppelten Abschnitten (18, 39) besteht, die dazwischen den zu der Drehachse (8) koaxialen Durchgang (34) abgrenzen.

7. Anordnung (1) nach einem der voranstehenden Ansprüche, **dadurch gekennzeichnet, dass** mindestens die erste Nabe (10) einen zylindrischen Kragen (14a) umfasst, der sich so erstreckt, dass er von der Zwischenwickeltrommel (5) koaxial zu der Drehachse (8) herausragt, und der mit einem von dem entsprechenden Seitenkopf (4) getragenen Knieglelenkbolzen (19) drehgekoppelt ist.

8. Anordnung (1) nach den Ansprüchen 2 und 7, **dadurch gekennzeichnet, dass** der Kniegelenkbolzen (19) einen axialen Sitz (35) aufweist, der in winkelmäßig festem Eingriff mit dem zweiten Endabschnitt (26) der Rückstellfeder (20) steht.

9. Anordnung (1) nach einem der Ansprüche 2 bis 8, **dadurch gekennzeichnet, dass** der erste Endabschnitt (25) ein geradliniges axiales Segment (27), das sich nach außen zu der ersten Nabe (10) erstreckt, und ein Endsegment (29) umfasst, das sich orthogonal zu dem geradlinigen axialen Segment (27) erstreckt und in einen Rückhaltesitz (30) der ersten Nabe (10) greift.

## Revendications

1. Ensemble d'enroulement (1) pour des véhicules, comprenant deux têtes latérales de liaison et de support (3, 4) adaptées pour être fermement reliées à des éléments de support respectifs, un tambour d'enroulement intermédiaire (5) s'étendant entre les têtes latérales (3, 4) et étant adapté pour supporter une bande flexible (6) reliée à celui-ci et enroulée sur celui-ci ; une paire de moyeux (10, 11) fermement reliés aux extrémités axiales opposées dudit tambour d'enroulement (5) et accouplés avec lesdites têtes (3, 4) afin de tourner autour d'un axe d'articulation (8) ; et un ressort de rappel (20) interposé entre une (4) des têtes latérales (3, 4) et le tambour d'enroulement (5) pour faire tourner le tambour (5) dans la direction d'enroulement de la bande ; l'ensemble (1) étant **caractérisé en ce que** ledit ressort de rappel (20) s'étend en porte-à-faux afin de faire saillie à partir d'un premier desdits moyeux (10, 11) dans ledit tambour d'enroulement (5).

2. Ensemble selon la revendication 1, **caractérisé en ce que** ledit ressort de rappel (20) comprend une première partie d'extrémité (25) fermement reliée audit premier moyeu (10), et une seconde partie d'extrémité (26) directement reliée à la tête latérale (4) avec laquelle ledit premier moyeu (10) est accouplé.

3. Ensemble selon la revendication 2, **caractérisé en ce que** ledit ressort de rappel (20) comprend une partie hélicoïdale (21) s'étendant afin de faire saillie dans ledit tambour d'enroulement (5) de façon coaxiale audit axe d'articulation (8), et **en ce que** ladite seconde partie d'extrémité comprend un segment rectiligne intermédiaire (32) s'étendant dans ladite partie hélicoïdale (21).

4. Ensemble selon la revendication 3, **caractérisé en ce que** ledit premier moyeu (10) possède un passage (34) coaxial audit axe d'articulation (8) traversé par ledit segment rectiligne intermédiaire (32).

5. Ensemble selon une des revendications 2 à 4, **caractérisé en ce que** ladite seconde partie d'extrémité (26) comprend un segment cintré (33) bloqué dans une position fixée angulairement sur la tête latérale (4) avec laquelle ledit premier moyeu (10) est accouplé.

6. Ensemble selon une quelconque des revendications précédentes, **caractérisé en ce que** ledit premier moyeu (10) est constitué de deux parties (38, 39) accouplées l'une avec l'autre et délimitant un passage (34) coaxial audit axe d'articulation (8) entre celles-ci.

7. Ensemble selon une quelconque des revendications précédentes, **caractérisé en ce qu'**au moins ledit premier moyeu (10) comprend un collier cylindrique (14a) s'étendant afin de faire saillie à partir dudit tambour (5) de façon coaxiale audit axe d'articulation (8) et accouplé de façon rotative avec un pivot (19) supporté par ladite tête latérale (4) correspondante.

8. Ensemble selon les revendications 2 et 7, **caractérisé en ce que** ledit pivot (19) possède un siège axial (35) avec lequel ladite seconde partie d'extrémité (26) dudit ressort de rappel (20) entre en prise de manière angulairement fixe.

9. Ensemble selon une quelconque des revendications 2 à 8, **caractérisé en ce que** ladite première partie d'extrémité (25) comprend un segment axial rectiligne (27) s'étendant vers l'extérieur dudit premier moyeu (10) et un segment d'extrémité (29) s'étendant transversalement audit segment rectiligne (27) et entrant en prise avec un siège de retenue (30) dudit premier moyeu (10).
